(19) Europäisches Patentamt
European Patent Office
Office européen des brevets

(11) EP 4 480 319 A1

(12) EUROPEAN PATENT APPLICATION

(43) Date of publication:
25.12.2024 Bulletin 2024/52

(21) Application number: 23181070.6

(22) Date of filing: 22.06.2023

(51) International Patent Classification (IPC):
A23J 1/00 (2006.01)       A23J 3/14 (2006.01)
A23J 3/26 (2006.01)       A23L 7/126 (2016.01)

(52) Cooperative Patent Classification (CPC):
A23J 3/26; A23J 1/006; A23J 3/14; A23L 7/126

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: DSM-Firmenich AG
4303 Kaiseraugst (CH)

(72) Inventors:
• MARTINEZ-VILLAGRAN, Maria
4303 Kaiseraugst (CH)
• IWANYSHYN, Wendy
4303 Kaiseraugst (CH)

(74) Representative: dsm-firmenich IP
DSM-Firmenich AG
Wurmisweg 576
4303 Kaiseraugst (CH)

(54) **GRANOLA CLUSTER**

(57) The invention relates to a granola cluster comprising cereals, a binder, a flavoring ingredient, texturized vegetable protein and a protein concentrate or isolate, wherein the sum of texturized vegetable protein and protein concentrate or isolate is at least 10 wt. % of the weight of the granola cluster.

## Description

### Field of the invention

This invention relates to a granola cluster and to a method for producing thereof. Further, the present invention relates to a food product comprising the granola cluster.

### Background of the invention

Consumers recognize more and more the benefits of a plant-based diet. At the same time, consumers demand solutions that are high in protein and are nutritious, while maintaining a great taste and texture.

Granola producers are looking for solutions to fortify their products with protein, fiber, vitamins and minerals. This new generation of granola products would serve health conscious consumers having an active lifestyle or in need of weight management. Therefore, there is a need in the art for granola products that enable the inclusion of plant protein, vitamins and minerals, while maintaining a great taste and texture.

Granola producers are expanding their products from breakfast cereals to alternatives forms able to substitute for example snack bars. A challenge in alternative offerings or forms is to maintain a texture that is both crispy as well as chewy.

### Description of the invention

The present invention relates to a granola cluster (composition) comprising cereal(s), a binder, a flavoring ingredient, texturized vegetable protein and a protein concentrate or isolate, preferably wherein the sum of texturized vegetable protein and protein concentrate or isolate is at least 10 wt. % of the weight of the granola cluster.

Surprisingly, the present inventors found that granola clusters can be fortified with plant protein without compromising the crunchy and chewy texture of the granola cluster. It is believed that the combination of a texturized vegetable protein with a protein concentrate or isolate enables protein amounts of at least 10 wt. %, while at the same time provide a crunchy, chewy texture that is appreciated by consumers.

As used herein, the term granola cluster means an agglomeration of a plurality of granola (or cereal) pieces held together by a binder. Granola clusters can be consumed as such, or added to a food product like yogurt or other snacks such as bars.

In a preferred embodiment, the present granola cluster has a weight within the range of 2 to 20 grams, such as 3 to 15 grams, or 5 to 12 grams. It was advantageously identified that the texturized vegetable protein provides a texture that allows a relatively large serving size, while maintaining a crunchy and chewy texture. This is beneficial as it creates opportunities to create a fortified granola that can be consumed as a snack such as an on-the-go format.

As used herein the term texturized vegetable protein or textured vegetable protein as used herein refers to a composition obtainable by (dry) extrusion cooking of proteins. Dry extrusion cooking means wherein an amount of water is used in the process of less than 30 wt. % (of the composition being extruded).

Preferably, the present texturized vegetable protein comprises proteins, fibers and/or carbohydrates. More preferably the present texturized vegetable protein comprises at least 50 wt. % protein, such as from 55 to 80 wt. % protein or 60 to 75 wt. % protein (per weight of the texturized vegetable protein).

Preferably, the present texturized vegetable protein has a moisture content of less than 25%, less than 20%, less than 15%, less than 10%. An low amount of moisture is advantageous in that it provides a better water activity to the granola cluster.

In an embodiment, the present texturized vegetable protein is a texturized legume protein, preferably selected from texturized pea protein, texturized chickpea protein and texturized faba bean protein. The present texturized vegetable protein may also comprise a blend of different proteins, such as a legume protein combined with an oil seed protein. For example the present texturized vegetable protein may comprise pea protein or faba bean protein combined with rapeseed protein.

Alternatively, the present texturized vegetable protein comprises lupin, pea, faba bean, kidney bean, green bean, haricot bean, pinto bean, mung bean, adzuki bean, chickpea, lentil and/or peanut.

Preferably the present texturized vegetable protein is not a texturized soy protein and/or the present granola cluster does not comprise soy protein. Soy is considered allergenic and therefore it is advantageous to provide a clean label allergen free granola cluster.

The amount of texturized vegetable protein in the present granola cluster is preferably with the range of 5 to 35 wt. % of the granola cluster, more preferably 8 to 25 wt. % of the granola cluster, most preferably with the range of 10 to 20 wt. % of the granola cluster. For example, the amount of texturized vegetable protein in the present granola cluster is around 11, 12, 13, 14, 15, 16, 17, 18 or around 19 wt. % of the granola cluster.

In a preferred embodiment, the present texturized vegetable protein has a mean particle size of less than 1 mm (millimetre), preferably less than 0.5 mm. Preferably the texturized vegetable plant protein has a mean particle size or mean diameter within the range of 100 to 500 $\mu$m, such as 150 to 400 $\mu$m, such as 150 to 350 $\mu$m, such as 200 to 300 $\mu$m. Preferably, at least 50%, at least 60%, at least 70% or at least 80% of the texturized vegetable protein has a diameter within the range of 100 to 500 $\mu$m, such as 150 to 400 $\mu$m, such as 150 to 350 $\mu$m, such as 200 to 300 $\mu$m. It has been found that the indicated particle sizes provide to the granola cluster a texture that both chewy and crispy, while maintaining the integrity of the cluster.

Preferably, the present texturized vegetable protein has a moisture content of less than 20 wt. %, such as less than 15 wt. %, such a less than 10 wt. % of the texturized vegetable protein. Preferably, the moisture content is 1 to 10 wt. % or 2 to 6 wt.

Preferably, the present granola cluster has a water activity ($a_w$) of less than 0.6, less than 0.59, less than 0.58, less than 0.57, less than 0.56, less than 0.55, less than 0.54, less than 0.53, less than 0.52, less than 0.51, less than 0.5. Preferably the present granola cluster has a water activity within the range of 0.4 to 0.6, 0.45 to 0.55 or 0.46 to 0.54.

Preferably, the present granola cluster comprises an amount of (plant or plant derived) protein of at least 5 wt. %, at least 6 wt. %, at least 7 wt.%, at least 8 wt. %, at least 9 wt. %, at least 10 wt. %, at least 11 wt. %, at least 12 wt. %, at least 13 wt. %, at least 14 wt. % or at least 15 wt. % of the granola cluster. Preferably, the present granola cluster comprises an amount of (plant) protein of 5 to 30 wt. %, preferably 10 to 25 wt. %, more preferably 12 to 20 wt. % of the granola cluster.

In a preferred embodiment, the present protein concentrate or isolate is a plant protein or is plant derived. For example the present protein concentrate or isolate is a lupin, pea, faba bean, kidney bean, green bean, haricot bean, pinto bean, mung bean, adzuki bean, chickpea, lentil, potato and/or peanut protein concentrate or isolate. Preferably the present protein concentrate or isolate is a pea protein concentrate or isolate.

In a preferred embodiment, the present protein concentrate or isolate is rapeseed protein concentrate or isolate, preferably a rapeseed protein concentrate or isolate comprising napins and cruciferins. Preferably the protein concentrate has an amount of protein of 55 to 85 wt. % of the protein concentrate. Preferably the protein isolate has an amount of protein within the range of 85 to 100 wt. % of the protein isolate. This is calculated using the Dumas method according to AOAC Official Method 991.20 Nitrogen (Total) in Milk, using a conversion factor of 6.25 was used to determine the amount of protein (% (w/w)). Typically, the non-protein content of the protein concentrate or isolate includes non-protein compounds such as, fibre and/or other carbohydrates, minerals, antinutritional substances. Preferably the present protein isolate has a protein content of at least 90 wt.% (calculated as Dumas N x 6.25) on a dry weight basis, preferably at least 91, 92, 93, 94, 95, 96, 97, 98, or at least 99 wt.% on a dry weight basis (calculated as Dumas N x 6.25).

The rapeseed used to obtain the rapeseed protein as applied in the instant invention is usually of the varieties *Brassica napus* or *Brassica juncea*. These varieties contain low levels of erucic acid and glucosinolates, and are the source of canola, a generic term for rapeseed oil comprising less than 2% erucic acid and less than 30 mmol/g glucosinolates. The predominant storage proteins found in rapeseed are cruciferins and napins. Cruciferins are globulins and are the major storage protein in the seed. A cruciferin is composed of 6 subunits and has a total molecular weight of approximately 300 kDa. Napins are albumins and are low molecular weight storage proteins with a molecular weight of approximately 14 kDa. Napins are more easily solubilized and are primarily proposed for use in applications where solubility is key. Preferably the present rapeseed protein is a rapeseed protein isolate.

In a preferred embodiment, the present rapeseed protein (isolate) comprises 40 to 65 wt. % cruciferins and 35 to 60 wt. % napins (of the rapeseed protein). Preferably, the present rapeseed protein comprises 40 to 55 wt. % cruciferins and 45 to 60 wt. % napins.

In a preferred embodiment, the present rapeseed protein (isolate) comprises 60 to 90 % cruciferins and 10 to 40 wt. % napins suc as 60 to 80 wt. % cruciferins and 20 to 40 wt. % napins. Preferably, the present rapeseed protein comprises 65 to 75 wt. % cruciferins and 25 to 35 wt. % napins. Preferably, the present rapeseed protein comprises 85 to 95 wt. % cruciferins and 5 to 15 wt. % napins.

In a preferred embodiment, the present rapeseed protein (isolate) comprises 1 to 10 wt. % cruciferins and 90 to 99 wt. % napins. Preferably, the present rapeseed protein comprises 1 to 5 wt. % cruciferins and 95 to 100 wt. % napins. Preferably, the present rapeseed protein comprises 1 to 20 wt. % cruciferins and 80 to 100 wt. % napins. An example of such a product is Puratein® HS from Merit Functional Foods.

Preferably, the amounts of cruciferins and napins calculated based on the total amount of rapeseed protein in the present granola cluster. Or alternatively, the amounts of cruciferins and napins are calcuated based on the sum of cruciferins and napins present in the granola cluster. Preferably, the amounts of cruciferins and napins are determined by size exclusion chromatography (SEC). Preferably, the amounts of cruciferins and napins are determined by size exclusion chromatography (SEC) using the following test: samples of protein isolate are dissolved in a 500 mM NaCl saline solution and analyzed by High Performance SEC using the same solution as the mobile phase, followed by detection using measuring UV absorbance at 280 nm, wherein the relative contribution of cruciferin and napin (wt. %) was calculated as the ratio of the peak area of each protein with respect to the sum of both peak areas.

Preferably, the present rapeseed protein (isolate) comprises 40 to 65 wt. % 12S and 35 to 60 wt. % 2S. Preferably, the present rapeseed protein comprises 40 to 55 wt. % 12S and 45 to 60 wt. % 2S. Preferably, the present rapeseed protein comprises 20 to 40 wt. % 12S and 45 to 65 wt. % 2S. An example of such a product is Puratein® C from Merit Functional Foods.

In a preferred embodiment, the present rapeseed protein (isolate) comprises 60 to 80 wt. % 12S and 20 to 40 wt. % 2S. Preferably, the present rapeseed protein comprises 65 to 75 wt. % 12S and 25 to 35 wt. % 2S. Preferably, the present rapeseed protein comprises 45 to 60 wt. % 12S and 20 to 40 wt. % 2S. An example of such a product is Puratein® G from Merit Functional Foods.

In a preferred embodiment, the present rapeseed protein (isolate) comprises 0 to 10 wt. % 12S and 90 to 100 wt. % 2S. Preferably, the present rapeseed protein comprises 1 to 5 wt. % 12S and 95 to 100 wt. % 2S. Preferably, the present rapeseed protein comprises 0 to 5 wt. % 12S and 80 to 90 wt. % 2S. An example of such a product is Puratein® HS from Merit Functional Foods.

Preferably, the amounts of 12S and 2S is determined by sedimentation velocity analytical ultracentrifugation (SV-AUC) analysis. Preferably, the amounts of 12S and 2S is determined by sedimentation velocity analytical ultracentrifugation (SV-AUC) analysis using the following test:

samples of protein isolate are dissolved in a 3.0% (or 500 mM) NaCl saline solution and amounts determined using interference optics.

In a preferred embodiment, the present rapeseed protein (isolate) comprises a conductivity in a 2 wt.% aqueous solution of less than 9000 μS/cm over a pH range of 2 to 12. More preferably the conductivity of the native rapeseed protein isolate in a 2 wt. % aqueous solution is less than 4000 μS/cm over a pH range of 2.5 to 11.5. For comparison the conductivity of a 5 g/l NaCl aqueous solution is around 9400 μS/cm. Preferably conductivity is measured with a conductivity meter, for example Hach sensION+ EC71.

In a preferred embodiment, the present rapeseed protein (isolate) comprises a solubility of at least 88 % when measured over a pH range from 3 to 10 at a temperature of 23 +/-2 °C. Preferably a solubility of at least 90, 91, 92, 93, 94, 95, 96, 97, 98 or at least 99% over a pH range from 3 to 10 at a temperature of 23 +/-2 °C. This is also known as the soluble solids index (SSI).

Preferably, solubility is calculated by:

$$\text{Protein solubility (\%)} = (\text{concentration of protein in supernatant (in g/l)} / \text{concentration of protein in total dispersion (in g/l)}) \times 100.$$

Preferably, the solubility is measured using the following test:

- sufficient protein to supply 0.8 g of protein is weighed into a beaker;
- a small amount of demineralized water is added to the powder and the mixture is stirred until a smooth paste is formed;
- additional demineralized water is then added to make a total weight of 40 g (yielding a 2 % w/w protein dispersion);
- the dispersion is slowly stirred for at least 30 min using a magnetic stirrer;
- afterwards the pH is determined and adjusted to the desired level (2, 3, 4, etc.) with NaOH or HCl;
- the pH of the dispersion is measured and corrected periodically during 60 minutes stirring;
- after 60 minutes of stirring, an aliquot of the protein dispersion is reserved for protein concentration determination (Dumas analysis; Dumas N x 6.25), another portion of the sample is centrifuged at 20,000 G for 2 min;
- the supernatant and pellet are separated after centrifugation;
- the protein concentration of the supernatant is also determined by Dumas analysis (Dumas N x 6.25);
- and protein solubility is calculated by:

$$\text{Protein solubility (\%)} = (\text{concentration of protein in supernatant (in g/l)} / \text{concentration of protein in total dispersion (in g/l)}) \times 100.$$

For use in human food consumption the removal of phytates, phenolics (or polyphenolics) and glucosinolates prevents unattractive flavour and coloration and prevents decreased nutritional value of the protein isolate. At the same time this removal enhances the protein content of the protein isolate.

In a preferred embodiment, the present rapeseed protein (isolate) has a phytate level less than 5 wt.%, preferably less than, 4, 3, 2, 1, 0.5, 0.4, 0.3, 0.2. 0.1 or less than 0.01 wt. %. Alternatively, the present rapeseed protein (isolate) has a phytate level of 0.01 to 4, 0.05 to 3, 0.1 to 1 wt.%. Preferably the phytate level is measured using method QD495, based on Ellis et al, Analytical Biochemistry Vol. 77:536-539 (1977).

In a preferred embodiment, the present rapeseed protein (isolate) has a phenolic content of less than 1 wt.% on dry matter expressed as sinapic acid equivalents. Preferably less than 0.9, 0.8, 0.7, 0.6, 0.5, 0.4, 0.3, 0.2, 0.1, 0.05 or less than 0.01 wt.% on dry matter expressed as sinapic acid equivalents.

In a preferred embodiment, the present rapeseed protein (isolate) comprises < 10 ppm gliadin. Preferably the rapeseed protein (isolate) comprises less than 5 ppm gliadin and most preferably no gliadin can be detected. Preferably, gliadin content is determined using sandwich ELISA from R-Biopharm (cat no R7001, lot 14434) used according to the manufacturer's instructions to determine the gliadin ppm in extracts.

In one embodiment, the present granola cluster further comprises fruit and/or fruit fragments. The fruits can be dehydrated, infused or freeze dried. Examples of fruits are cranberries, raisings, strawberries, watermelon, grapes, banana, peaches, mangos, pineapples, apples, cherries, oranges, grapefruits, mandarins, pomelos, clementines, blueberries, raspberries, pears, blackberries, plums, kiwis, melons, lemons, limes, tangerines, coconut, combinations thereof, or any suitable alternative.

Preferably, the percentage of fruits or fruit fragments in the granola cluster is at least about 5 wt. %, at least about 10 wt. %, or at least about 15 wt. % by weight of the granola cluster. In some embodiments, the percentage of produce fragments in the granola cluster is about 5 wt. %, about 10 wt. %, about 11 wt. %, about 12 wt. %, about 13 wt. %, about 14 wt. %, about 15 wt. %, about 16 wt. %, about 17 wt. %, about 18 wt. %, about 19 wt. %, about 20 wt. %, about 21 wt. %, about 22 wt. %, about 23 wt. %, about 24 wt. %, about 25 wt. %, about 30 wt. %, about 35 wt. %, or about 40 wt. % by weight of the granola cluster. In some embodiments, the percentage of fruit or fruit fragments in the granola cluster is in a range of about 5 wt. % to about 30 wt. %, about 5 wt. % to about 25 wt. %, about 10 wt. % to about 20 wt. %, or about 12 wt. % to about 18 wt. % by weight of the granola cluster.

Preferably, the fruit fragments have a mean particle size of less than 1 mm (millimetre), preferably less than 0.5 mm. Preferably fruit fragments have a mean particle size or mean diameter within the range of 100 to 500 $\mu$m, such as 150 to 400 $\mu$m, such as 150 to 350 $\mu$m, such as 200 to 300 $\mu$m. Preferably, at least 50%, at least 60%, at least 70% or at least 80% of the fruit fragments have a diameter within the range of 100 to 500 $\mu$m, such as 150 to 400 $\mu$m, such as 150 to 350 $\mu$m, such as 200 to 300 $\mu$m.

Preferably or alternatively, the present granola cluster comprises vegetable fragments, for example include those formed from carrots, broccoli, peppers, cucumbers, corn, spinach, cauliflower, combinations thereof, or any suitable alternative.

In an embodiment, the present granola cluster further comprises nuts and/or nuts fragments. Preferably the nuts are chosen from almonds, cashews, pecans, macadamias, hazelnuts, pistachio, walnuts, and combinations thereof. Preferably the amount of nuts is within the range of 1 to 25 wt. % of the granola cluster, preferably within the range of 5 to 20 wt. % of the granola cluster, more within the range of 10 to 18 wt. % of the granola cluster or alternatively within the range of 1 to 10 wt. % of the granola cluster.

Preferably, the nut fragments have a mean particle size of less than 1 mm (millimetre), preferably less than 0.5 mm. Preferably nut fragments have a mean particle size or mean diameter within the range of 100 to 500 $\mu$m, such as 150 to 400 $\mu$m, such as 150 to 350 $\mu$m, such as 200 to 300 $\mu$m. Preferably, at least 50%, at least 60%, at least 70% or at least 80% of the nut fragments have a diameter within the range of 100 to 500 $\mu$m, such as 150 to 400 $\mu$m, such as 150 to 350 $\mu$m, such as 200 to 300 $\mu$m.

In an embodiment, the present binder is a syrup, preferably a syrup chosen from the group consisting of agave syrup, maltitol syrup, tapioca syrup, brown rice syrup and combinations thereof. Preferably, the amount of binder is within the range of 10 to 70 wt. % of the granola cluster, preferably within the range of 20 to 60 wt. % of the granola cluster, more preferably within the range of 30 to 50 wt. % of the granola cluster.

In on embodiment, the present cereal is chosen from the group consisting of oats, corn, rice, wheat, barley, sorghum, millet, rye, triticale, buckwheat, quinoa, spelt, einkorn, emmer, durum, kamut and combinations thereof. Preferably the amount of cereal is within the range of 1 to 40 wt. % of the granola cluster, more preferably within the range of 5 to 30 wt. of the granola cluster, most preferably within the range of 10 to 20 wt. % of the granola cluster.

Preferably, the present granola cluster comprises a dietary fiber. Preferably the dietary fiber is a plant-based fiber. Preferably a fiber selected from the group consisting of pea fiber, fava bean fiber, lupin fiber, oil seed fiber (such as sunflower seed fiber or cotton seed fiber), fruit fiber (such as apple fiber), cereal fiber (such as oat fiber, maize fiber, rice fiber), bamboo fiber, potato fiber, inulin, and combinations thereof. Preferably the present dietary fiber is inulin derived from chicory root, or an inulin type fraction such as inulin type fructans. The amount of fiber is preferably 1 to 10 wt. % of the granola cluster, such as 1.5 to 5 wt. % of the granola cluster or such as 2 to 3 wt. % of the granola cluster.

Preferably, the present granola cluster further comprises a mineral. Preferably a mineral chosen from the group consisting of calcium phosphate, potassium phosphate, chromium chloride, copper gluconate, magnesium phosphate, manganese sulfate, potassium iodide, reduced iron, sodium molybdate, zinc sulfate, tricalcium phosphate, ferrous fumarate, magnesium oxide, potassium chloride, potassium citrate and zinc oxide.

In a preferred embodiment, the present granola cluster further comprises vitamins. Preferably the vitamin is a vitamin composition comprising vitamin A, D, E, thiamin, riboflavin, niacin, pantothenic acid, pyridoxine, B2, B3, B5, B6, B12, ascorbic acid, calcium magnesium, potassium, biotin and/or folic acid. Alternatively, the vitamin is vitamin A, D, E and/or B12.

In an embodiment, the present granola cluster further comprises a nutrient, preferably wherein the nutrient comprise both vitamins and minerals, preferably vitamins chosen from the group consisting of E, B2, B3, B5, B6 and B12, preferably minerals chosen from the group consisting of iron, selenium and zinc.

In a preferred embodiment, the present flavoring ingredient comprises a taste modifier and/or a taste compound, such as a steviol glycoside, a glucosylated steviol glycoside, or any combinations thereof.

The flavoring ingredient may be a taste modifier and/or a taste compound. Examples of taste compounds are salt, inorganic salts, organic acids, sugars, amino acids and their salts, ribonucleotides, and sources thereof. A "taste modifier" is understood as an active ingredient that operates on a human taste receptor, or provides a sensory characteristic related to mouthfeel (such as body, roundness, or mouth-coating) to a product being consumed. Non-limiting examples of taste modifiers include active ingredients that enhance, modify or impart saltiness, fattiness, umami, kokumi, heat sensation or cooling sensation, sweetness, acidity, tingling, bitterness or sourness.

In some embodiments, the granola cluster disclosed herein comprise a flavoring or flavoring ingredient. In general, the flavoring improves the taste and flavor of the granola cluster or the resulting flavored product in which the granola cluster is used. Such improvement includes reducing the bitterness of the granola cluster, reducing the perception of astringency of the granola cluster, reducing the perception of green taste notes (such as pea taste) of the granola cluster, reducing the perception of cereal notes of the granola cluster or the resulting flavored product, improving the perception of creaminess of the granola cluster, improving the perception of creaminess of the granola cluster, improving the perception of fattiness of the granola cluster, improving the perception of sweetness of the granola cluster, improving the perception of savory taste (umami or kokumi) of the granola cluster, improving the mouthfeel or mouthcoating of the granola cluster, improving the perception of juiciness of the granola cluster, improving the perception of thickness of the granola cluster, improving the vanillic character of the granola cluster, or any combination thereof.

Any suitable flavoring can be used. In some embodiments, the flavoring comprises synthetic flavor oils and flavoring aromatics or oils, oleoresins and extracts derived from plants, leaves, flowers, fruits, and so forth, or combinations thereof. Non-limiting examples of flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Non-limiting examples of other flavors include natural and synthetic fruit flavors such as vanilla, and citrus oils including lemon, orange, lime, grapefruit, yuzu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. In the context of dairy or dairy analog products, the most commonly used flavor agents are agents that impart flavors such as vanilla, French vanilla, chocolate, banana, lemon, hazelnut, coconut, almond, strawberry, mocha, coffee, tea, chai, cinnamon, caramel, cream, brown sugar, toffee, pecan, butter pecan, toffee, Irish crème, white chocolate, raspberry, pumpkin pie spice, peppermint, or any combination thereof.

In some embodiments, the flavoring is a flavoring commonly used in the context of savory products. Such flavorings include glutamates, arginates, avocadene, avocadyne, a purine ribonucleitide (such as inosine monophosphate (IMP), guanosine monophosphate (GMP), hypoxanthine, inosine), a yeast extract, a fermented food product, cheese, garlic or extracts thereof, a gamma-glutamyl-containing polypeptide, a gamma-glutamyl-containing oligopeptide (such as gamma-glutamyl-containing tripeptides); a flavor-modifying composition (such as a cinnamic acid amide or a derivative thereof), a nucleotide, an oligonucleotide, a plant extract, a food extract, or any combinations thereof.

In some embodiments, the flavoring comprises a yeast extract, such as a yeast lysate. Such extracts can be obtained from any suitable yeast strain, where such extracts are suitable for human consumption. Non-limiting examples of such yeasts include: yeasts of the genus Saccharomyces, such as *Saccharomyces cerevisiae* or *Saccharomyces pastorianus*; yeasts of the genus Candida, such as Candida utilis; yeasts of the genus Kluyveromyces, such as *Kluyveromyces lactis* or *Kluyveromyces marxianus*; yeasts of the genus Pichia such as *Pichia pastoris*; yeasts of the genus Debaryomyces such as *Debaryomyces hansenii*; and yeasts of the genus Zygosaccharomyces such as *Zygosaccharomyces mellis.* In some embodiments, the yeast is a yeast collected after brewing beer, sake, or the like. In some embodiments, the yeast is a yeast subjected to drying treatment (dried yeast) after collection.

Such extracts can be produced by any suitable means. In general, yeast extracts or lysates are made by extracting the contents of the yeast cells from the cell wall material. In many instances, the digestive enzymes in the cells (or additional enzymes added to the composition) break down the proteins and polynucleotides in the yeast to amino acids, oligopeptides (for example, from 2 to 10 peptides), nucleotides, oligonucleotides (from 2 to 10 nucleotides), and mixtures thereof. A yeast lysate can be prepared by lysing a yeast. For example, in some embodiments, the yeast after culture is crushed or lysed by an enzymatic decomposition method, a self-digestion method, an alkaline extraction method, a hot water extraction method, an acid decomposition method, an ultrasonic crushing method, crushing with a homogenizer, a freezing-thawing method, or the like (two or more thereof may be used in combination), whereby a yeast lysate is obtained. Yeast may be cultured by a conventional method. In some embodiments, the yeast after culture is heat-treated and then treated with a lytic enzyme to obtain an enzyme lysate. The conditions for the heat treatment are, for example, 80 °C to 90 °C for 5 minutes to 30 minutes. As the lytic enzyme used for the enzymatic decomposition method, various enzymes can be used as long as they can lyse the cell wall of yeast. The reaction conditions may be set so as to be optimum or suitable for the lytic enzyme(s) to be used, and specific examples thereof can include a temperature of 50 °C to 60 °C, and a pH of 7.0 to 8.0. The reaction time is also not particularly limited, and can be, for example, 3 hours to 5 hours.

Compositions comprising yeast lysate can be obtained from a variety of commercial sources. For example, in some embodiments, the yeast lysate is the flavoring additive sold under the names MODUMAX or MAXAROME from dsm firmenich (Delft, The Netherlands)

The flavoring also includes, in certain embodiments, one or more additional flavor-modifying compounds, such as compounds that enhance sweetness (e.g., phloretin, naringenin, glucosylated steviol glycosides, etc.), compounds that block bitterness, compounds that enhance umami, compounds that enhance kokumi, compounds that reduce sourness or licorice taste, compounds that enhance saltiness, compounds that enhance a cooling effect, compounds that enhance mouthfeel, or any combinations of the foregoing.

Thus, in some embodiments, the flavoring comprises one or more sweetness enhancing compounds. Such sweetness enhancing compounds include, but are not limited to, naturally derived compounds, such as hesperitin dihydrochalcone, hesperitin dihydrochalcone-4'-O'glucoside, neohesperitin dihydrochalcone, brazzein, hesperidin, phyllodulcin, naringenin, naringin, phloretin, glucosylated steviol glycosides, (2R,3R)-3-acetoxy-5,7,4'-trihydroxyflavanone, (2R,3R)-3-acetoxy-5,7,3'-trihydroxy-4'-methoxyflavanone, rubusosides, or synthetic compounds, such as any compounds set forth in U.S. Patent Nos. 8,541,421; 8,815,956; 9,834,544; 8,592,592; 8,877,922; 9,000,054; and 9,000,051, as well as U.S. Patent Application Publication No. 2017/0119032. As used herein, the term "glucosylated steviol glycoside" refers to the product of enzymatically glucosylating natural steviol glycoside compounds. The glucosylation generally occurs through a glycosidic bond, such as an $\alpha$-1,2 bond, an $\alpha$-1,4 bond, an $\alpha$-1.6 bond, a $\beta$-1,2 bond, a $\beta$-1,4 bond, a $\beta$-1,6 bond, and so forth. In some embodiments of any of the preceding embodiments, the granola cluster comprises 3-((4-amino-2,2-dioxo-1H-benzo[c][1,2,6]thiadiazin-5-yl)oxy)-2,2-dimethyl-N-propyl-propanamide or N-(1-((4-amino-2,2-dioxo-1H-benzo[c][1,2,6]thiadiazin-5-yl)oxy)-2-methyl-propan-2-yl)isonicotinamide.

In some further embodiments, the flavoring comprises one or more umami enhancing compounds. Such umami enhancing compounds include, but are not limited to, naturally derived compounds, or synthetic compounds, such as any compounds set forth in U.S. Patent Nos. 8,735,081; 8,124,121; and 8,968,708. In some embodiments, the umami-enhancing compound is (2R,4R)-1,2,4-trihydroxy-heptadec-16-ene, (2R,4R)-1,2,4-trihydroxyheptadec-16-yne, or a mixture thereof. In some embodiments, the umami-enhancing compound is (3R,5S)-1-(4-hydroxy-3-methoxyphenyl) decane-3,5-diol diacetate. In some embodiments, the umami-enhancing compound is N-(heptan-4-yl)benzo[d][1,3] dioxole-5-carboxamide.

In some further embodiments, the flavoring comprises one or more cooling enhancing compounds. Such cooling enhancing compounds include, but are not limited to, naturally derived compounds, such as menthol or analogs thereof, or synthetic compounds, such as any compounds set forth in U.S. Patent Nos. 9,394,287 and 10,421,727.

In some further embodiments, the flavoring comprises one or more bitterness blocking compounds. Such bitterness blocking compounds include, but are not limited to, naturally derived compounds, such as menthol or analogs thereof, or synthetic compounds, such as any compounds set forth in U.S. Patent Nos. 8,076,491; 8,445,692; and 9,247,759. In some embodiments, the bitterness blocking compound is 3-(1-((3,5-dimethylisoxazol-4-yl)-methyl)-1H-pyrazol-4-yl)-1-(3-hydroxybenzyl)-imidazolidine-2,4-dione.

In some further embodiments, the flavoring comprises one or more sour taste modulating compounds.

In some further embodiments, the flavoring comprises one or more mouthfeel modifying compounds. Such mouthfeel modifying compounds include, but are not limited to, tannins, cellulosic materials, bamboo powder, and the like.

In some further embodiments, the flavoring comprises one or more flavor masking compounds. Such flavor masking compounds include, but are not limited to, cellulosic materials, materials extracted from fungus, materials extracted from plants, citric acid, carbonic acid (or carbonates), and the like.

In some embodiments, the flavor-modifying compounds described above are included to improve other tastants that may be present in the granola cluster itself, or that may be included within the flavored products that employ such compositions. Such tastants include sweeteners, umami tastants, kokumi tastants, bitter tastants, sour tastants, and the like.

For example, in some embodiments, the granola cluster comprises a sweetener. The sweetener can be present in any suitable concentration, depending on factors such as the sweetener's potency as a sweetener, its solubility, and the like.

In some further embodiments of the embodiments set forth in this paragraph, the sweetener is a steviol glycoside (such as rebaudioside A, rebaudioside D, rebaudioside E, rebaudioside M, or any combination thereof), a mogroside (such as mogroside III, mogroside IV, mogroside V, siamenoside I, isomogroside V, mogroside IVE, isomogroside IV, mogroside IIIE, 11-oxomogroside V, the 1,6-$\alpha$ isomer of siamenoside I, and any combinations thereof), a derivative of either of the foregoing, such as glycoside derivatives (e.g., glucosylates), cyclamate, aspartame, sucralose, acesulfame K, or any combination thereof.

In general, the granola clusters can include any suitable sweeteners or combination of sweeteners. In some embodiments, the sweetener is a common saccharide sweeteners, such as sucrose, fructose, glucose, and sweetener compositions comprising natural sugars, such as corn syrup (including high fructose corn syrup) or other syrups or sweetener concentrates derived from natural fruit and vegetable sources. In some embodiments, the sweetener is sucrose, fructose, or a combination thereof. In some embodiments, the sweetener is sucrose. In some other embodiments, the sweetener is selected from rare natural sugars including D-allose, D-psicose, L-ribose, D-tagatose, L-glucose, L-fucose, L-arbinose, D-turanose, and D-leucrose. In some embodiments, the sweetener is selected from semi-synthetic "sugar alcohol" sweeteners such as erythritol, isomalt, lactitol, mannitol, sorbitol, xylitol, maltodextrin, and the like. In some embodiments, the sweetener is selected from artificial sweeteners such as aspartame, saccharin, acesulfame-K, cyclamate, sucralose, and alitame. In some embodiments, the sweetener is selected from the group consisting of cyclamic acid, mogroside, tagatose, maltose, galactose, mannose, sucrose, fructose, lactose, allulose, neotame and other aspartame derivatives, glucose, D-tryptophan, glycine, maltitol, lactitol, isomalt, hydrogenated glucose syrup (HGS), hydrogenated starch hydrolyzate (HSH), stevioside, rebaudioside A, other sweet Stevia-based glycosides, chemically modified steviol glycosides (such as glucosylated steviol glycosides), mogrosides, chemically modified mogrosides (such as glucosylated mogrosides), carrelame and other guanidine-based sweeteners. In some embodiments, the additional sweetener is a combination of two or more of the sweeteners set forth in this paragraph. In some embodiments, the sweetener may combinations of two, three, four or five sweeteners as disclosed herein. In some embodiments, the additional sweetener is a sugar. In some embodiments, the additional sweetener is a combination of one or more sugars and other natural and artificial sweeteners. In some embodiments, the additional sweetener is a sugar. In some embodiments, the sugar is cane sugar. In some embodiments, the sugar is beet sugar. In some embodiments, the sugar may be sucrose, fructose, glucose or combinations thereof. In some embodiments, the sugar is sucrose. In some embodiments, the sugar is a combination of fructose and glucose.

In some embodiments, the sweeteners can also include, for example, sweetener compositions comprising one or more natural or synthetic carbohydrate, such as corn syrup, high fructose corn syrup, high maltose corn syrup, glucose syrup, sucralose syrup, hydrogenated glucose syrup (HGS), hydrogenated starch hydrolyzate (HSH), or other syrups or sweetener concentrates derived from natural fruit and vegetable sources, or semi synthetic "sugar alcohol" sweeteners such as polyols. Non-limiting examples of polyols in some embodiments include erythritol, maltitol, mannitol, sorbitol, lactitol, xylitol, isomalt, propylene glycol, glycerol (glycerin), threitol, galactitol, palatinose, reduced isomalto-oligosaccharides, reduced xylo-oligosaccharides, reduced gentio-oligosaccharides, reduced maltose syrup, reduced glucose syrup, isomaltulose, maltodextrin, and the like, and sugar alcohols or any other carbohydrates or combinations thereof capable of being reduced which do not adversely affect taste.

The sweetener may be a natural or synthetic sweetener that includes, but is not limited to, agave inulin, agave nectar, agave syrup, amazake, brazzein, brown rice syrup, coconut crystals, coconut sugars, coconut syrup, date sugar, fructans (also referred to as inulin fiber, fructo-oligosaccharides, or oligo-fructose), green stevia powder, stevia rebaudiana, rebaudioside A, rebaudioside B, rebaudioside C, rebaudioside D, rebaudioside E, rebaudioside F, rebaudioside I, rebaudioside H, rebaudioside L, rebaudioside K, rebaudioside J, rebaudioside N, rebaudioside O, rebaudioside M and other sweet stevia-based glycosides, stevioside, stevioside extracts, honey, Jerusalem artichoke syrup, licorice root, luo han guo (fruit, powder, or extracts), lucuma (fruit, powder, or extracts), maple sap (including, for example, sap extracted from Acer saccharum, Acer nigrum, Acer rubrum, Acer saccharinum, Acer platanoides, Acer negundo, Acer macrophyllum, Acer grandidentatum, Acer glabrum, Acer mono), maple syrup, maple sugar, walnut sap (including, for example, sap extracted from Juglans cinerea, Juglans nigra, Juglans ailatifolia, Juglans regia), birch sap (including, for example, sap extracted from Betula papyrifera, Betula alleghaniensis, Betula lenta, Betula nigra, Betula populifolia, Betula pendula), sycamore sap (such as, for example, sap extracted from Platanus occidentalis), ironwood sap (such as, for example, sap extracted from Ostrya virginiana), mascobado, molasses (such as, for example, blackstrap molasses), molasses sugar, monatin, monellin, cane sugar (also referred to as natural sugar, unrefined cane sugar, or sucrose), palm sugar, panocha, piloncillo, rapadura, raw sugar, rice syrup, sorghum, sorghum syrup, cassava syrup (also referred to as tapioca syrup), thaumatin, yacon root, malt syrup, barley malt syrup, barley malt powder, beet sugar, cane sugar, crystalline juice crystals, caramel, carbitol, carob syrup, castor sugar, hydrogenated starch hydrolates, hydrolyzed can juice, hydrolyzed starch, invert sugar, anethole, arabinogalactan, arrope, syrup, P-4000, acesulfame potassium (also referred to as acesulfame K or ace-K), alitame (also referred to as aclame), advantame, aspartame, baiyunoside, neotame, benzamide derivatives, bernadame, canderel, carrelame and other guanidine-based sweeteners, vegetable fiber, corn sugar, coupling sugars, curculin, cyclamates, cyclocarioside I, demerara, dextran, dextrin, diastatic malt, dulcin, sucrol, valzin, dulcoside A, dulcoside B, emulin, enoxolone, maltodextrin, saccharin, estragole, ethyl maltol, glucin, gluconic acid, glucono-lactone, glucosamine, glucoronic acid, glycerol, glycine, glycyphillin, glycyrrhizin, glycyrrhetic acid monoglucuronide, golden sugar, yellow sugar, golden syrup, granulated sugar, gynostemma, hernandulcin, isomerized liquid sugars, jallab, chicory root dietary fiber, kynurenine derivatives (including N'-formyl-kynurenine, N'-acetyl-kynurenine, 6-chloro-kynurenine), galactitol, litesse, ligicane, lycasin, lugduname, guanidine, falernum, mabinlin I, mabinlin II, maltol, maltisorb, maltodextrin, maltotriol, mannosamine, miraculin, mizuame, mogrosides (including, for example, mogroside IV, mogroside V, and neomogroside), mukurozioside, nano sugar, naringin dihydrochalcone, neohesperidine dihydrochalcone, nib sugar, nigero-oligosaccharide, norbu, orgeat syrup, osladin, pekmez, pentadin, periandrin I, perillaldehyde, perillartine, petphyllum, phenylalanine, phlomisoside I, phlorodizin, phyllodulcin, polyglycitol syrups, polypodoside A, pterocaryoside A, pterocaryoside B, rebiana, refiners syrup, rub syrup, rubusoside, selligueain A, shugr, siamenoside I, siraitia grosvenorii, soybean oligosaccharide, Splenda, SRI oxime V, steviol glycoside, steviolbioside, stevioside, strogins 1, 2, and 4, sucronic acid, sucrononate, sugar, suosan, phloridzin, superaspartame, tetrasaccharide, threitol, treacle, trilobtain, tryptophan and derivatives (6-trifluoromethyl-tryptophan, 6-chloro-D-tryptophan), vanilla sugar, volemitol, birch syrup, aspartame-acesulfame, assugrin, and combinations or blends of any two or more thereof.

In still other embodiments, the sweetener can be a chemically or enzymatically modified natural high potency sweetener. Modified natural high potency sweeteners include glycosylated natural high potency sweetener such as glucosyl-, galactosyl-, or fructosyl- derivatives containing 1-50 glycosidic residues. Glycosylated natural high potency sweeteners may be prepared by enzymatic transglycosylation reaction catalyzed by various enzymes possessing transglycosylating activity. In some embodiments, the modified sweetener can be substituted or unsubstituted.

Additional sweeteners also include combinations of any two or more of any of the aforementioned sweeteners. In some embodiments, the sweetener may comprise combinations of two, three, four or five sweeteners as disclosed herein. In some embodiments, the sweetener may be a sugar. In some embodiments, the sweetener may be a combination of one or more sugars and other natural and artificial sweeteners. In some embodiments, the sweetener is a caloric sweetener, such as sucrose, fructose, xylitol, erythritol, or combinations thereof. In some embodiments, the granola clusters are free (or, in some embodiments) substantially free of stevia-derived sweeteners, such as steviol glycosides, glucosylated steviol glycosides, or rebaudiosides. For example, in some embodiments, the granola clusters are either free of steviaderived sweeteners or comprise stevia-derived sweeteners in a concentration of no more than 1000 ppm, or no more than 500 ppm, or no more than 200 ppm, or no more than 100 ppm, or no more than 50 ppm, or no more than 20 ppm, or no more than 10 ppm, or no more than 5 ppm, or no more than 3 ppm, or no more than 1 ppm.

In some embodiments, the granola cluster comprises compounds made as the product of Maillard reactions between a reducing sugar and amino acids or polypeptides. Any suitable such Maillard reaction products can be used or formed in situ. Non-limiting examples include furosine, 5-hydroxymethylfurfural, acrylamide, heterocyclic amines, advanced glycation end products, melanoidins, and the like. Certain commercial products contain Maillard reaction products or assist in the formation thereof when the granola cluster is exposed to heat. Examples of such commercial products includes the MAXAVOR line from dsm firmenich (Delft, The Netherlands).

In some embodiments, the granola cluster comprises an emulsifier, such as a non-hydrocolloid emulsifier. Any suitable non-hydrocolloid emulsifier can be used. For example, in some non-limiting embodiments, the emulsifier comprises lecithin, monoglycerides, diglycerides, polysorbates, vegetable oils, and the like. In some embodiments, the emulsifier comprises lecithin. The emulsifier can be present in any suitable concentration, which can be adjusted so as to form a stable emulsion of the other components in the granola cluster, for example, when incorporated into a flavored product.

In some instances, it may be desirable to include additives that assist in adjusting the viscosity of the granola cluster. Various salts and acids can be used to carry out such adjustments. In some embodiments, the granola cluster comprises one or more salts. Non-limiting examples of suitable salts include magnesium sulfate, sodium chloride, sodium sulfate, calcium chloride, calcium sulfate, potassium sulfate, potassium chloride, potassium sorbate, potassium phosphate, potassium monophosphate, zinc chloride, zinc sulfate, or any mixtures thereof. In some embodiments, the granola cluster comprises one or more acids, which may be used alone or in combination with the aforementioned salts. Non-limiting examples of suitable acids include citric acid, lactic acid, acetic acid, tartaric acid, succinic acid, ascorbic acid, maleic acid, phosphoric acid, monopotassium phosphate, gluconic acid, glucono-lactone, glucoronic acid, glycyrrhetic acid, folic acid, pantothenic acid or mixtures thereof.

The granola clusters disclosed herein can, in certain embodiments, contain other additives, adjuvants, and the like, that are commonly included in food products, pet food products, and feed products. For example, the granola clusters disclosed herein can, in certain embodiments, comprise any additional ingredients or combination of ingredients as are commonly used in comestible products, including, but not limited to: acids, including, for example citric acid, phosphoric acid, ascorbic acid, sodium acid sulfate, lactic acid, or tartaric acid;

bitter ingredients, including, for example caffeine, quinine, green tea, catechins, polyphenols, green robusta coffee extract, green coffee extract, potassium chloride, menthol, or proteins (such as proteins and protein isolates derived from plants, algae, or fungi);

coloring agents, including, for example caramel color, Red #40, Yellow #5, Yellow #6, Blue #1, Red #3, purple carrot, black carrot juice, purple sweet potato, vegetable juice, fruit juice, beta carotene, turmeric curcumin, or titanium dioxide;

preservatives, including, for example sodium benzoate, potassium benzoate, potassium sorbate, sodium metabisulfate, sorbic acid, or benzoic acid;

antioxidants including, for example ascorbic acid, calcium disodium EDTA, alpha tocopherols, mixed tocopherols, rosemary extract, grape seed extract, resveratrol, or sodium hexametaphosphate;

vitamins or functional ingredients including, for example resveratrol, Co-Q10, omega 3 fatty acids, theanine, choline chloride (citocoline), fibersol, inulin (chicory root), taurine, panax ginseng extract, guanana extract, ginger extract, L-phenylalanine, L-carnitine, L-tartrate, D-glucoronolactone, inositol, bioflavonoids, Echinacea, ginko biloba, yerba mate, flax seed oil, garcinia cambogia rind extract, white tea extract, ribose, milk thistle extract, grape seed extract, pyrodixine HCl (vitamin B6), cyanoobalamin (vitamin B12), niacinamide (vitamin B3), biotin, calcium lactate, calcium pantothenate (pantothenic acid), calcium phosphate, calcium carbonate, chromium chloride, chromium polynicotinate, cupric sulfate, folic acid, ferric pyrophosphate, iron, magnesium lactate, magnesium carbonate, magnesium sulfate, monopotassium phosphate, monosodium phosphate, phosphorus, potassium iodide, potassium phosphate, riboflavin, sodium sulfate, sodium gluconate, sodium polyphosphate, sodium bicarbonate, thiamine mononitrate, vitamin D3, vitamin A palmitate, zinc gluconate, zinc lactate, or zinc sulphate;

clouding agents, including, for example ester gun, brominated vegetable oil (BVO), or sucrose acetate isobutyrate (SAIB);

buffers, including, for example sodium citrate, potassium citrate, or salt;

flavors, including, for example propylene glycol, ethyl alcohol, glycerine, gum Arabic (gum acacia), maltodextrin, modified corn starch, dextrose, natural flavor, natural flavor with other natural flavors (natural flavor WONF), natural and artificial flavors, artificial flavor, silicon dioxide, magnesium carbonate, or tricalcium phosphate; or

starches and stabilizers, including, for example pectin, xanthan gum, carboxylmethylcellulose (CMC), polysorbate 60, polysorbate 80, medium chain triglycerides, cellulose gel, cellulose gum, sodium caseinate, modified food starch, gum Arabic (gum acacia), gellan gum, inulin, or carrageenan.

According to another aspect, the present invention relates to a food product comprising the present granola cluster. Preferably the food product is a bar or a snack bar. Alternatively the food product is a yogurt, such as a ready to eat breakfast yogurt.

According to another aspect, the present invention relates to a method for producing the present granola cluster, comprising the steps of:

a. providing a texturized vegetable protein having a mean particle size of less than 1 mm;

b. blending the texturized vegetable protein with a binder, a cereal, a flavoring ingredient, a protein concentrate or isolate and mixing until a (substantial) homogenous product is obtained;

c. and shaping the homogenous product into a granola cluster.

Optionally present step a. comprises a step of grinding a texturized vegetable protein, preferably grinding to provide a texturized vegetable protein having a mean particle size of less than 1 mm (millimetre), preferably less than 0.5 mm. Preferably grinding to provide a texturized vegetable plant protein having a particle size or mean diameter within the range of 100 to 500 $\mu$m, such as 150 to 400 $\mu$m, such as 150 to 350 $\mu$m, such as 200 to 300 $\mu$m. Preferably, at least 50%, at least 60%, at least 70% or at least 80% of the texturized vegetable protein has a diameter within the range of 100 to 500 $\mu$m, such as 150 to 400 $\mu$m, such as 150 to 350 $\mu$m, such as 200 to 300 $\mu$m.

In an embodiment, the present method further comprises a step of preparing the binder, comprising heating the binder ingredients to cooking temperature to form the binder. Preferably the present flavoring ingredients are added to the binder during cooling down of the binder.

The invention is further illustrated in the following examples.

### Example 1

### Granola clusters with pea and rapeseed protein

A granola cluster is produced using the ingredients as listed in table 1 below. The binder syrup was prepared by mixing first mixing the sunflower oil and lecithin, followed by mixing with the remaining binder syrup ingredients as listed in table 1. The mixture was heated to boiling, and continued for 45 seconds. The syrup was removed from the heat and the flavoring ingredients were added and mixed. The texturized vegetable protien, rice crisps, almonds, cranberries and oats were ground to a mean particle size of between 100 and 300 $\mu$m. The texturized vegetable protein (example 1) or the rice crisps (control) was together with the remaining ingredients mixed, and then added to the binder syrup and mixed until homogenous product was obtained. Clusters of around 10 gram were made by scoping the homogenous product and the clusters are allowed to cool down to room temperature for sensory test.

Table 1

| Ingredient | Supplier | Example 1 (wt. %) | Control (wt. %) |
|---|---|---|---|
| Texturized vegetable protein | Vertis™ Pea TVP P65.11C, from dsm firmenich | 13.00 | 0.00 |
| Protein isolate | Vertis™ CanolaPRO® from dsm firmenich | 2.80 | 0.00 |
| Rice crisps | Organic brown rice crisps, 365, from Whole Foods | 0.00 | 15.80 |
| Vitamin and mineral premix | Vitamin E, B3, B5, B6, B12, C and Fe, ginseng, FA10903000 from dsm firmenich | 0.40 | 0.40 |
| Flavoring ingredient | TastePRINT® 566253 from dsm firmenich | 0.03 | 0.03 |
| Flavoring ingredient | Natural bitter blocker 566020 from dsm firmenich | 0.03 | 0.03 |
| Flavoring ingredient | Natural ModulaSence 565967 from dsm firmenich | 0.08 | 0.08 |
| Flavoring ingredient | Natural berry flavor 568963 from dsm firmenich | 0.07 | 0.07 |
| Flavoring ingredient | Natural vanilla flavor 580011 from dsm firmenich | 0.09 | 0.09 |
| Nuts | Almonds | 14.00 | 14.00 |
| Fruts | Dried infused cranberries | 16.00 | 16.00 |
| Cereal | Oats | 12.00 | 12.00 |
| Binder | Binder syrup (see below for ingredients) | 41.50 | 41.50 |
| **Total** | | 100 | 100 |
| | | | |
| Binder syrup | Brown rice syrup | 62.90 | 62.90 |
| | Natural NutriGEM® 566270 from dsm firmenich | 7.00 | 7.00 |
| | Agave syrup | 5.00 | 5.00 |
| | Molasses | 1.00 | 1.00 |
| | Glycerin | 6.70 | 6.70 |
| | Sunflower oil | 4.80 | 4.80 |
| | Lecithin | 0.10 | 0.10 |
| | Invert sugar | 12.50 | 12.50 |
| **Total** | | 100 | 100 |

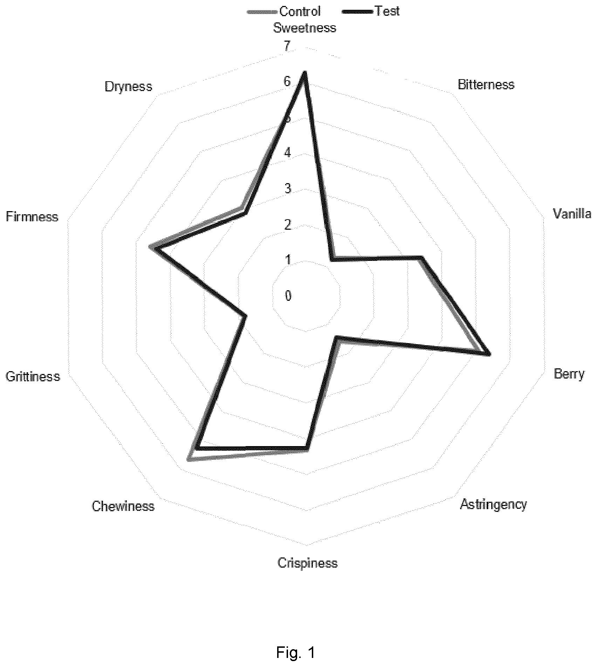

A sensory test was performed using Qualitative Descriptive Analysis. An experiencend panel with 15 members (flavorists and application technologists) rated attribute intensities using a 0-10 scale (0= imperceptible, 10=extremely pronounced). Statistical analysis was carried out using ANOVA post hoc Duncan's test, at 95% confidence level. The results are shown in table 2 below and figure 1, and clearly show that there are no significant differences between the control with rice crisps and the protein and vitamin fortified granola cluster.

Table 2

| Attribute | Control | Example 1 (test) | P-Value |
|---|---|---|---|
| Sweetness | 6.14 | 6.27 | 0.5794 |
| Bitterness | 1.33 | 1.25 | 0.7349 |
| Vanilla | 3.32 | 3.41 | 0.7893 |
| Berry | 5.07 | 5.37 | 0.2423 |
| Astringency | 1.59 | 1.43 | 0.3008 |
| Crispiness | 4.31 | 4.25 | 0.8480 |
| Chewiness | 5.66 | 5.25 | 0.2611 |
| Grittiness | 1.81 | 1.80 | 0.9812 |
| Firmness | 4.59 | 4.39 | 0.5313 |
| Dryness | 3.05 | 2.87 | 0.5903 |

### Example 2

**Granola clusters with faba bean and pea protein**

Example 1 was repeated whereby the texturized vegetable protein was texturized faba bean protein (Vertis™ faba TVP F70.1I from dsm firmenich) and the protein concentrate was pea concentrate (Vertis™ pea protein concentrate P55X from dsm firmenich), in the amounts as indicated in table 1. A sensory assessment (results not shown) indicated that the protein and vitamin fortified granola cluster had no significant differences as the control with rice crisps.

**Claims**

1. Granola cluster comprising cereals, a binder, a flavoring ingredient, texturized vegetable protein and a protein concentrate or isolate, wherein the sum of texturized vegetable protein and protein concentrate or isolate is at least 10 wt. % of the weight of the granola cluster.

2. Granola cluster according to claim 1, wherein the texturized vegetable protein is a texturized legume protein, preferably selected from texturized pea protein, texturized chickpea protein and texturized faba bean protein.

3. Granola cluster according to any of the preceding claims, wherein the texturized vegetable protein has a mean particle size of less than 1 mm, preferably less than 0.5 mm.

4. Granola cluster according to any of the preceding claims, wherein the protein concentrate or isolate is a rapeseed protein concentrate or isolate, preferably a rapeseed protein concentrate or isolate comprising napins and cruciferins.

5. Granola cluster according to claim 4, wherein the rapeseed protein comprises 40 to 65 wt. % cruciferins and 35 to 60 wt. % napins.

6. Granola cluster according to claim 4, wherein the rapeseed protein comprises 60 to 80 wt. % cruciferins and 20 to 40 wt. % napins.

7. Granola cluster according to claim 4, wherein the rapeseed protein comprises 1 to 10 wt. % cruciferins and 90 to 99 wt. % napins.

8. Granola cluster according to any of the preceding claims, further comprising fruit and/or fruit fragments.

9. Granola cluster according to any of the preceding claims, further comprising nuts and/or nuts fragments.

10. Granola cluster according to any of the preceding claims, wherein the binder is a syrup, preferably a syrup chosen from the group consisting of agave syrup, maltitol syrup, tapioca syrup, brown rice syrup and combinations thereof.

11. Granola cluster according to any of the preceding claims, wherein the cereal is chosen from the group consisting of oats, corn, rice, wheat, barley, sorghum, millet, rye, triticale, buckwheat, quinoa, spelt, einkorn, emmer, durum, kamut and combinations thereof.

12. Granola cluster according to any of the preceding claims, further comprising a nutrient, preferably wherein the nutrient comprise both vitamins and minerals, preferably vitamins chosen from the group consisting of E, B2, B3, B5, B6 and B12, preferably minerals chosen from the group consisting of iron, selenium and zinc.

13. Granola cluster according to any of the preceding claims, wherein the flavoring ingredient comprises a taste modifier and a taste compound, such as a steviol glycoside, a glucosylated steviol glycoside, or any combinations thereof.

14. Food product comprising the granola cluster according to any of the preceding claims, preferably wherein the food product is a bar.

15. Method for producing a granola cluster as defined in any of the preceding claims, comprising the steps of:

   a. providing a texturized vegetable protein having a mean particle size of less than 1 mm;
   b. blending the texturized vegetable protein with a binder, a cereal, a flavoring ingredient, a protein concentrate or isolate and mixing until a homogenous product is obtained;
   c. and shaping the homogenous product into a granola cluster.

Fig. 1

Europäisches
Patentamt

European
Patent Office

Office européen
des brevets

# EUROPEAN SEARCH REPORT

Application Number

EP 23 18 1070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/97633 A2 (GEN MILLS INC [US]; EVENSON KEITH A [US] ET AL.) 27 December 2001 (2001-12-27) | 1-3, 8-10, 12-15 | INV. A23J1/00 A23J3/14 |
| Y | * page 15 - page 18; claims 1, 71, 77 * | 1-15 | A23J3/26 A23L7/126 |
| X | US 2004/013771 A1 (FUNK DEAN F [US] ET AL) 22 January 2004 (2004-01-22) | 1,2,8-14 | |
| Y | * paragraph [0010] - paragraph [0150] * | 1-15 | |
| Y | WO 2022/269103 A2 (DSM IP ASSETS BV [NL]) 29 December 2022 (2022-12-29) * page 2 - page 10; claims 1, 10-13 * | 1-15 | |
| Y | US 4 153 738 A (RONAI KENNETH S ET AL) 8 May 1979 (1979-05-08) * column 6 * | 1-15 | |
| Y | US 2023/172229 A1 (SEIN ARJEN [NL] ET AL) 8 June 2023 (2023-06-08) * paragraph [0014] * | 1-15 | TECHNICAL FIELDS SEARCHED (IPC) |
| Y | Johnson Wayne: "Homemade Granola Bars Are The Perfect Portable Snack", NBC Chicago, 16 March 2012 (2012-03-16), XP093104492, Retrieved from the Internet: URL:https://www.nbcchicago.com/local/homemade-granola-bars-are-the-perfect-portable-snack/1952108/ [retrieved on 2023-11-22] * the whole document * | 1-15 | A23J A23L |

-/--

The present search report has been drawn up for all claims

| Place of search | Date of completion of the search | Examiner |
|---|---|---|
| The Hague | 22 November 2023 | Merel-Rausch, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

**EP 23 18 1070**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DATABASE GNPD [Online]<br>MINTEL;<br>3 May 2014 (2014-05-03),<br>anonymous: "Soya Crunchy Muesli",<br>XP093104497,<br>Database accession no. 2393637<br>* the whole document * | 1-15 | |
| Y | DATABASE GNPD [Online]<br>MINTEL;<br>8 March 2011 (2011-03-08),<br>anonymous: "Oat and Honey Flavour Crunchy Granola Bar",<br>XP093104498,<br>Database accession no. 1500302<br>* the whole document * | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 22 November 2023 | Merel-Rausch, Eva |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 480 319 A1**

## ANNEX TO THE EUROPEAN SEARCH REPORT
## ON EUROPEAN PATENT APPLICATION NO.     EP 23 18 1070

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2023

| Patent document cited in search report | | Publication date | Patent family member(s) | | Publication date |
|---|---|---|---|---|---|
| WO 0197633 | A2 | 27-12-2001 | AU | 6663401 A | 02-01-2002 |
| | | | US | 6558718 B1 | 06-05-2003 |
| | | | US | 2003170370 A1 | 11-09-2003 |
| | | | WO | 0197633 A2 | 27-12-2001 |
| US 2004013771 | A1 | 22-01-2004 | NONE | | |
| WO 2022269103 | A2 | 29-12-2022 | NONE | | |
| US 4153738 | A | 08-05-1979 | AU | 8582775 A | 08-12-1977 |
| | | | BE | 834596 A | 20-04-1976 |
| | | | BR | 7506764 A | 17-08-1976 |
| | | | CA | 1055302 A | 29-05-1979 |
| | | | CH | 598774 A5 | 12-05-1978 |
| | | | CS | 188855 B2 | 30-03-1979 |
| | | | DE | 2547076 A1 | 29-04-1976 |
| | | | DK | 469675 A | 19-04-1976 |
| | | | FI | 752902 A | 19-04-1976 |
| | | | FR | 2287856 A1 | 14-05-1976 |
| | | | GB | 1522702 A | 23-08-1978 |
| | | | HU | 181040 B | 30-05-1983 |
| | | | IL | 48251 A | 31-01-1979 |
| | | | IT | 1047843 B | 20-10-1980 |
| | | | JP | S5613 B2 | 06-01-1981 |
| | | | JP | S523855 A | 12-01-1977 |
| | | | NL | 7512242 A | 21-04-1976 |
| | | | NO | 140650 B | 09-07-1979 |
| | | | RO | 81482 B | 30-04-1983 |
| | | | TR | 19353 A | 04-01-1979 |
| | | | US | 4103034 A | 25-07-1978 |
| | | | US | 4153738 A | 08-05-1979 |
| | | | YU | 262475 A | 27-04-1983 |
| US 2023172229 | A1 | 08-06-2023 | CA | 3172829 A1 | 21-01-2021 |
| | | | CN | 115315192 A | 08-11-2022 |
| | | | EP | 4125408 A1 | 08-02-2023 |
| | | | US | 2023172229 A1 | 08-06-2023 |
| | | | WO | 2021009387 A1 | 21-01-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8541421 B
- US 8815956 B
- US 9834544 B
- US 8592592 B
- US 8877922 B
- US 9000054 B
- US 9000051 B
- US 20170119032

- US 8735081 B
- US 8124121 B
- US 8968708 B
- US 9394287 B
- US 10421727 B
- US 8076491 B
- US 8445692 B
- US 9247759 B

**Non-patent literature cited in the description**

- **ELLIS et al.** *Analytical Biochemistry*, 1977, vol. 77, 536-539